# EUROPEAN PATENT APPLICATION

(11) **EP 2 153 735 A1**
(43) Date of publication of application: **17.02.2010**
(21) Application number: 08161253.3
(22) Date of filing: 28.07.2008
(51) Int. Cl.: A23L 1/16, A23L 1/305, A23L 1/308, A23L 1/162

(54) **Pasta composition for dehydrated food matrices**

(71) Applicant: Nestec S.A., 1800 Vevey (CH)
(72) Inventor: Battaini, Giuseppe, 78467 Konstanz (DE); Fezer, Ramona, 78224 Singen (DE); Roth, Niklaus, 8451 Kleinandelfingen (CH); Lagarrigue, Sophie, 78462 Konstanz (DE)
(74) Representative: Rupp, Christian

(57) **Abstract**

The present invention relates to a dry pasta composition comprising protein, fibres including beta-glucans which has a particularly satiating effect when rehydrated and consumed. It is suitable for use in instant food products such as dehydrated soup. The invention further relates to the use of beta-glucans in food compositions for inducing satiety and to a method of preparing satiety-inducing food compositions.

## Description

### Field of the invention

The present invention relates to a dry pasta composition comprising protein, fibres including beta-glucans suitable for use in instant food products such as dehydrated soup. The dry pasta composition has a particularly satiating effect when rehydrated and consumed. The invention further relates to the use of said pasta compositions for inducing satiety in food compositions and to a method of preparing satiety-inducing food compositions.

### Background of the invention

In the context of health and weight management, a number of approaches have been suggested to increase the fullness sensation upon consumption of food.

In food compositions in general, the two most important factors for inducing satiety are generally considered to be protein and fibres. However, generally they are used at high dosage which is detrimental to the product sensory attributes and organoleptic properties.

In particular, it has been difficult to increase the amount of protein and/or fibre in pasta products as this generally compromises the texture and the organoleptic properties.

Furthermore, these high protein and fibre amounts are difficult to incorporate into dry food compositions due to technological and/or sensory issues.

Recent developments for increasing the protein and/or fibre content of pasta are described for example in US2004/0224068, WO02/35945, WO00/25590, WO91/00695, WO 02/30217, WO2005/107499, IT1264492, US2004/0241303, EP 0412639, US2006/0134295, US 3,992,554, W02005/120252.

Generally, the increased protein level of pasta is provided by soy-based products or wheat proteins. From an organoleptic point of view, these solutions are not ideal. Furthermore, the increased level of fibre has generally been added to the compositions with the aim of reducing the caloric value of said compositions.

A further problem with dehydrated food matrices is the requirement for rapid reconstitution in hot liquids, while traditional pasta compositions require a cooking time of about 10 minutes in boiling water.

### Object of the invention

There is therefore still a need to provide pasta compositions suitable for inclusion in dehydrated food matrices, which induce satiety upon consumption and which have good organoleptic properties.

### Summary of the invention

This object is solved by the present independent claims. The dependent claims further develop the central idea of the invention.

Thus, in a first aspect the invention pertains to pre-cooked dry pasta composition, comprising at least 19% protein, at least 9% fibres, wherein the fibres are selected such that the pasta composition comprises at least 2% beta-glucan.

In a second aspect, the use of a pasta composition according to any of claims 1 to 7 in dehydrated food compositions is provided.

A further aspect of the invention relates to the use of a pasta composition according to any of claims 1 to 7 in a food composition for inducing satiety upon consumption of said food composition.

Finally, a method for the preparation of a satiety-inducing food composition comprising the step of
a. providing a pre-cooked dry pasta composition according to any of claims 1 to 7 and
b. further processing the pasta composition
also forms part of the invention.

### Description of the invention

Unless otherwise indicated, all percentages in the present description are percentages by weight on a dry matter basis.

The present invention relates to a dry pasta composition. By pasta is to be understood an unleavened kneaded and extruded dough composition made principally of wheat. Pasta is to be differentiated from noodles, since noodles are based on flours with lower protein content and are not formed by extrusion but by sheeting and cutting or stretching.

Preferably, the pasta composition of the invention is made with durum semolina. Typically, the amount of durum semolina is at least 55%, preferably at least 60%. The pasta composition may further comprise egg and other starch sources. The moisture content of such dry pasta is typically less than 15%. Preferably, the fat content of the pasta composition is less than 5%, typically about 2%.

The pasta of the invention is pre-cooked. Thus, the starch in the pasta composition is at least partially gelatinised. Pre-cooking can be carried out by any method known in the art. For example, it can be done by cooking the pasta by any means (boiling water, microwave etc.) for 5 minutes, and then drying the pasta to provide the pre-cooked dry pasta composition of the invention.

The advantage of the pre-cooked pasta is that it can be quickly prepared without needing to boil in water for 10 minutes, as normally required for traditional pasta products. Thus, the pre-cooked pasta lends itself perfectly to instant food compositions, which can be prepared in up to 5 minutes. The pasta of the invention can thus be incorporated into dehydrated instant soup composition, instant pasta-based meals etc.

The pasta of the invention comprises at least 19% protein. In a preferred embodiment, the pasta composition comprises 19-30%, preferably 20-30%, more preferably 20-21% protein. The protein may be selected from any of dairy protein, meat protein, legume protein, cereal protein, meat or fish protein hydrolysate, whey protein, caseinates, casein glycomacropeptides etc. or any mixtures thereof. Preferably, the protein is not soy protein. Indeed, soy proteins generally lead to products having poor organoleptic properties. Furthermore, products with soy protein may raise consumer acceptance issues due to a great amount of soy crops being genetically modified.

The pasta may comprise wheat gluten in an amount of less than 5%, typically about 3%.

Preferably, the present composition comprises at least 5% dairy protein. Dairy protein may be provided by milk powder, skim milk powder, whey protein, caseinates, casein glycomacropeptides, etc. Indeed, it has been found that the presence of dairy protein is advantageous not only to the taste of the product but also to its texture. The texture of the product would in fact be compromised by the high content of fibre present (at least 9%). The presence of at least 5% dairy protein allows to conserve good organoleptic properties despite the high fibre content.

As stated above, the present pasta composition comprises at least 9% fibres. In a preferred embodiment, the pasta composition comprises 9-20% fibres. Fibres may be selected from any of vegetables, whole cereals such as barley, oat etc., legumes such as peas, gums such as guar gum, acacia gum and inulins and any mixtures thereof. They may preferably be from grains, bran and wholegrain products.

Preferably, the fibres consist at least of 20% soluble viscous fibres.

Soluble viscous fibres can be provided, for example, by oats, barley, beans, soybeans, peas, methylcellulose, glucomannan, guar, locust bean gum, sugar beet, gum arabic, pectin, certain vegetables such as okra and eggplant and citrus fruits.

The fibres in the present pasta composition are selected such that the pasta composition comprises at least 2% beta-glucan. Preferably, the pasta composition comprises at least 3% beta-glucan.

The total fibre content in the composition may be assessed by methods known in the art such as the method AOAC 985.29, whereby specific fibre content (e.g. beta-glucan content) can be assessed by other methods such as AOAC 995.16.

Beta-glucans, also called beta 1,3-D glucans, are polysaccharides that only contain glucose as structural components. Beta 1,3-D glucans are chains of D-glucose molecules, with the six-sided D-glucose rings connected at the 1 and 3 positions.

Beta-glucan may be provided by oats and/or barley and/or beta-glucan concentrates. By beta-glucan concentrates are meant sources having a high content of beta-glucan. Such beta-glucan concentrates are commercially available, for example, under the trade name of Oatwell^{®}.

Natural sources of beta-glucans such as oat typically contain about 4% beta-glucan, while barley may comprise up to 10% beta-glucan. Beta-glucan concentrates comprise at least 10%, preferably at least 20% beta-glucan.

Preferably, the protein and fibre present in the pasta compositions of the invention have not been modified, i.e. have not been subjected to processing prior to inclusion in the pasta composition of the present invention.

In a preferred embodiment, the pasta composition of the invention comprises 19-30% protein, 9-20% fibres, wherein the fibres are selected such that the beta-glucan content is at least 2%.

The pasta compositions of the invention are used according to the invention in dehydrated food compositions, such as soup, pasta-based meal etc. Preferably, these food compositions are instant, i.e. they may be prepared within up to 5 minutes.

The pasta compositions may be used in dehydrated food compositions in an amount of 10-90%, preferably in an amount of at least 20%.

The pasta compositions may therefore act as protein and fibre carrier in the food compositions.

It has further been found that the pasta composition of the invention has an increased effect on satiety induction.

Thus, the invention in a further aspect, relates to the use of a pasta composition according to any of the embodiments described herein in a food composition for inducing satiety upon consumption of said food composition.

Satiety is a physiological response which can be assessed according to methods known to the skilled person and described for example in Am. J. Clin. Nutr. 76:1023-1030 (2002).

In addition to its satiety inducing effect, the presence of beta-glucan in the pasta compositions helps improve cholesterol levels as well as confers a low glycemic index to said food compositions. The glycemic index (GI) indicates the rate at which glucose is released in the blood upon consumption. Typically, the glycemic index of the present products is evaluated as less than medium.

Thus, the use of the present pasta composition in food composition has combined benefits which confer healthy attributes to the food compositions. Indeed, the combination of satiety induction, cholesterol and blood sugar control render the food composition attractive to the consumer.

The presence of a high amount of protein and fibres such as beta-glucans has the added benefit that the food composition has an even more pronounced effect on satiety upon consumption.

Preferably, the food composition after addition of the pasta composition of the invention comprises at least 19% protein. Additionally, the food composition may comprise at least 9% fibres.

The pasta composition of the invention may therefore be used as a protein and fibre carrier in food matrices.

In yet a further aspect of the invention, a method for the preparation of a satiety-inducing food composition is provided. The method comprises the step of providing a pre-cooked dry pasta composition as described above. Any embodiment of the pre-cooked dry pasta composition described herein can be used in the present method.

The pasta composition is then further processed according to the method of the invention. Further processing includes cooking or soaking in a liquid having a temperature of at least 80°C. Cooking may be carried out on a stove or in a microwave.

The liquid may be water, milk, broth etc. Cooking or soaking is preferably carried out for up to 5 minutes. Therefore, the pasta composition is prepared very quickly, which is ideal for use in dehydrated instant food products such as instant soup, instant pasta-based meal, etc.

The present invention thus offers the advantages of providing a way to enhance the satiety effect of food composition. In particular, it provides pasta compositions which are adapted for use in dehydrated food matrices, which may be prepared rapidly compared to conventional pasta composition and at the same time offer the health benefits of satiety, high fibre and protein content, and further health benefits such as cholesterol control and low glycemic index. The product of the invention also has good organoleptic properties in terms of taste and texture, which is not straightforward when high levels of fibres and protein are used.

The pasta composition of the invention can therefore be used as a protein and fibre carrier in dehydrated food compositions such as dehydrated soups, wherein increasing the amount of fibre and protein is technologically difficult.

The present invention is further illustrated hereinafter by the means of the non-limiting examples.

### Examples

### Example 1

A typical composition for the pasta of the invention is shown in the table below.

| **Ingredient** | **wt% on 95% dry matter basis** |
|---|---|
| Durum semolina | 59-62 |
| Whole egg liquid | 0-2 |
| Oat bran meal Oatwell^{®} (22% beta-glucan) | 17-19 |
| Wheat gluten | 2-3 |
| Potato starch | 4-9 |
| Casein Glycomacropeptide | 6-7 |

The above composition has the nutritional values shown in the table below:

**Table 2**

| **Nutrients** | **%** |
|---|---|
| Fat | 2-3 |
| Protein | 19-21 |
| Carbohydrate | 48-51 |
| Dietary fibre | 9-11 |

### Example 2

A typical list of ingredients in the preparation of a clear soup containing pasta inclusions according to the invention is given below.

| **Ingredients** | **%** |
|---|---|
| Salt, spices, flavours, herbs | 6 |
| Fat | 7 |
| Starches, flours | 2 |
| Maltodextrin | 31 |
| Pasta of the invention | 40 |
| Milk and animal protein | 10 |
| Vegetable powder and pieces | 4 |

### Example 3

A typical list of ingredients in the preparation of a creamy soup containing pasta inclusions according to the invention is given below.

| **Ingredients** | **%** |
|---|---|
| Salt, spices, flavours, herbs | 9 |
| Fat, cream | 7 |
| Starches, flours | 1 |
| Maltodextrin | 8 |
| Pasta of the invention | 30 |
| Milk and animal protein | 16 |
| Vegetable powder and pieces | 29 |

## Claims

1. Pre-cooked dry pasta composition, comprising at least 19% protein, at least 9% fibres, wherein the fibres are selected such that the pasta composition comprises at least 2% beta-glucan.

2. Pre-cooked pasta composition according to claim 1, wherein the protein is selected from any of dairy protein, meat protein, legume protein, cereal protein, meat or fish protein hydrolysate, whey protein, caseinates, casein glycomacropeptides etc or any mixtures thereof.

3. Pasta composition according to claims 1 or 2, wherein the composition comprises at least 5% dairy protein.

4. Pasta composition according to any of the preceding claims, wherein the fibres are selected from any of vegetables, whole cereals such as barley, oat etc., legumes such as peas, gums such as guar gum, acacia gum and inulins and any mixtures thereof or any mixtures thereof.

5. Pasta composition according to any of the preceding claims, wherein the fibres consist at least of 22% soluble viscous fibres.

6. Pasta composition according to any of the preceding claims, wherein beta-glucan is provided by oat and/or barley and/or beta-glucan concentrates.

7. Pasta composition according to any of the preceding claims, comprising 19-30% protein, 9-20% fibres, wherein the fibres are selected such that the beta-glucan content is at least 2%.

8. Use of a pasta composition according to any of claims 1 to 7 in dehydrated food compositions.

9. Use according to claim 8, wherein the dehydrated food composition is a soup or a pasta-based meal.

10. Use according to claim 8 or 9, wherein the pasta is present in the dehydrated food composition in an amount of 10-90%.

11. Use of a pasta composition according to any of claims 1 to 7 in a food composition for inducing satiety upon consumption of said food composition.

12. Use according to any of claims 8 to 11, wherein the pasta composition is a protein and fibre carrier in the food composition.

13. Use according to any of claims 8 to 12, wherein the food composition comprises at least 19% protein.

14. Use according to any of claims 8 to 13, wherein the food composition comprises at least 9% fibres.

15. Method for the preparation of a satiety-inducing food composition comprising the step of
a. providing a pre-cooked dry pasta composition according to any of claims 1 to 7 and
b. further processing the pasta composition.

16. Method according to claim 15, wherein the further processing includes cooking or soaking in a liquid having a temperature of at least 80°C, preferably for up to 5 minutes.
